# EUROPÄISCHE PATENTANMELDUNG

(11) **EP 1 553 312 A2**
(43) Veröffentlichungstag der Anmeldung: **13.07.2005**
(21) Anmeldenummer: 05007118.2
(22) Anmeldetag: 21.03.2002
(51) Int. Cl.: F16B 37/06, F16B 37/00

(54) **Verfahren zur Erzeugung einer elektrisch leitenden Verbindung zwischen einem elektrischen Anschlusselement und einem Blechteil, hohles Befestigungselement und Zusammenbauteil**

(30) Priorität: 23.03.2001 DE 10114200
(62) Teilanmeldung aus: 02735158.4
(71) Anmelder: PROFIL-Verbindungstechnik GmbH & Co. KG, 61381 Friedrichsdorf (DE)
(72) Erfinder: Babej, Jiri, 35423 Lich (DE)
(74) Vertreter: Manitz, Finsterwald & Partner GbR

(57) **Zusammenfassung**

Ein Verfahren zur Erzeugung einer elektrisch leitenden Verbindung zwischen einem elektrischen Anschlusselement wie ein Kabelschuh und einem Blechteil, bei dem ein hohles Befestigungselement mit dem Blechteil verdrehfest vernietet wird und hierdurch eine elektrisch leitende Verbindung zwischen Befestigungselement und Blechteil erzeugt wird und das so hergestellte Zusammenbauteil anschließend mit einer Schutzbeschichtung, wie beispielsweise eine Lackschicht, versehen wird, zeichnet sich dadurch aus, dass im Bereich der Stirnseite des Befestigungselements, an der das elektrische Anschlusselement angebracht wird, eine Aufnahme für das elektrische Anschlusselement ausgebildet wird, die eine Verdrehung der Anschlusseinrichtung gegenüber dem Befestigungselement verhindert und dass eine Gewinde formende oder schneidende Schraube zur Befestigung des elektrischen Anschlusselements auf das hohle Befestigungselement in das hohle Befestigungselement eingeschraubt wird und dort durch die Einschraubbewegung ein Gewinde formt bzw. schneidet. Ferner wird ein hohles Befestigungselement zur elektrisch leitfähigen Abringung eines elektrischen Anschlusselements an ein Blechteil sowie ein Zusammenbauteil bestehend aus dem hohlen Befestigungselement und einem Blechteil beansprucht.

## Beschreibung

Die vorliegende Erfindung betrifft ein Funktionselement mit einem eine ringförmige Auflagefläche aufweisenden Kopfteil und einem rohrförmigen auf der Seite der Auflagefläche des Kopfteils vorgesehenen, vom Kopfteil weg erstreckenden Nietabschnitt. Weiterhin betrifft die Erfindung ein Zusammenbauteil bestehend aus einem Blechteil und einem solchen Funktionselement sowie ein Verfahren zur Anbringung eines solchen Funktionselementes an ein Blechteil.

Ein Funktionselement der Eingangs genannten Art ist beispielsweise aus der EP-A-539743 bekannt, und zwar sowohl in Form eines Mutterelements als auch in Form eines Bolzenelementes.

Weder das Mutterelement noch das Bolzenelement gemäß EP-A-539793 kann selbststanzend in ein Blechteil eingebracht werden, sondern das Blechteil muß vorgelocht werden. Weiterhin umfaßt die Blechvorbereitung bei der EP-A-539793 die Erzeugung einer axial vorstehenden Ringlippe in das Blechteil, die eine Öffnung begrenzt, in die der Nietabschnitt des Funktionselementes hineingeführt werden muß. Bei dieser Operation steht die Ringlippe auf der Seite des Blechteils vor, von der das Funktionselement eingebracht wird. Die vorstehende Lippe mit der vorgefertigten Öffnung bedeutet in der Praxis, daß das Funktionselement mit hoher Genauigkeit in bezug auf das Blechteil ausgerichtet werden muß, um die ordnungsgemäße Anbringung des Funktionselementes sicherzustellen.

Aufgabe der vorliegenden Erfindung ist es, ein Funktionselement sowie ein Verfahren zur Anbringung des Funktionselementes an ein Blechteil vorzusehen, das eine kostengünstige Anbringung des Funktionselementes an ein Blechteil ermöglicht, ohne besondere Ansprüche an die Ausrichtung des Funktionselementes mit dem Bauteil zu stellen, wobei die Anforderungen bei einer etwaigen, eventuell notwendigen Vorbereitung des Blechteils nicht sehr hoch sind und dennoch eine hochwertige Verbindung zwischen dem Funktionselement und dem Blechteil zustande kommt. Weiterhin soll eine selbststanzende Ausführung des Elementes, falls erwünscht, möglich sein und es soll darüberhinaus eine Verbindung zwischen dem Funktionselement und dem Blechteil zustande kommen, die auch bei beschichteten Blechen eine elektrisch leitende Verbindung ermöglicht.

Zur Lösung dieser Aufgabe wird erfindungsgemäß ein Funktionselement der eingangs genannten Art vorgesehen, das sich dadurch auszeichnet, daß ein rohrförmiger Führungsabschnitt konzentrisch zum rohrförmigen Nietabschnitt und radial innerhalb diesem angeordnet ist, wobei zwischen dem Führungsabschnitt (18) und dem Nietabschnitt ein Ringspalt vorgesehen ist und der Führungsabschnitt über das freie Ende des Nietabschnittes hinausragt. Weiterhin wird erfindungsgemäß ein Zusammenbauteil nach dem Anspruch 20 sowie ein Verfahren zur Anbringung eines Funktionselement nach den nebengeordneten Ansprüchen 24 und 25 vorgesehen.

Dadurch, daß ein rohrförmiger Führungsabschnitt konzentrisch zum rohrförmigen Nietabschnitt und radial innerhalb diesem angeordnet ist, wobei der Führungsabschnitt über das zweite Ende des Nietabschnittes hinausragt, wird erfindungsgemäß bei der Anwendung des Funktionselement mit einem vorgelochten Blech dafür gesorgt, daß sich der Führungsabschnitt in das Loch des vorgelochten Blechs hineinbewegt und gegebenenfalls unter Ausweitung des Loches für eine Zentrierung des Funktionselementes gegenüber dem vorgefertigten Loch bzw. aufgeweiteten vorbereiteten Loch sorgt. Da der Führungsvorgang vor der anschließenden Aufweitung des Loches durch den Nietabschnitt und der anschließenden Umbördelung des Nietabschnittes stattfindet, wird auch sichergestellt, daß stets eine hochwertige Verbindung zwischen dem Funktionselement und dem Blechteil zustande kommt.

Bei Vorlochung des Blechteils kann diese Vorlochung auch so vorgenommen werden, daß auf der Seite des Bleches, von der das Funktionselement eingeführt wird, keine vorstehende Ringlippe vorliegt, was ebenfalls die Ausrichtung des Funktionselementes mit dem Blechteil erleichtert.

Besonders günstig bei der vorliegenden Erfindung ist es, daß der Führungsabschnitt des Funktionselementes als Stanzabschnitt ausgebildet werden kann, wodurch das Funktionselement selbststanzend in das Blechteil eingebracht werden kann, so daß eine Vorlochung überhaupt nicht notwendig ist und die Forderungen an die Ausrichtung des Funktionselementes mit dem Blechteil noch geringer werden. Durch die selbstanzende Ausbildung des Funktionselementes wird auch eine preisgünstige Herstellung des Zusammenbauteils erreicht, da die Operation der Vorlochung des Blechteils entfällt. Hierdurch wird auch das Verfahren zur Anbringung des Funktionselementes an das Blechteil vereinfacht.

An dieser Stelle soll kurz auf die DE-C-3446978 und die DE-C-3447006 hingewiesen werden. Die DE-C-3446978 beschreibt unter anderem ein Mutterelement, das selbststanzend in ein Blechteil eingebracht wird, während die DE-C-3447006 ein ähnlich konzipiertes Bolzenelement offenbart. Weder das Mutterelement noch das Bolzenelement gemäß den oben genannten deutschen Patenten hat einen Führungsabschnitt zusätzlich zum Nietabschnitt, so daß der Nietabschnitt sowohl die Stanzfunktion als auch die Nietfunktion ausüben muß, was schließlich komplizierter ist und strengere Anforderungen an den Nietabschnitt und an die verwendete Matrize stellt, als bei der vorliegenden Erfindung der Fall ist.

Besonders bevorzugt ist es, wenn das freie Ende der Wandung der ringförmigen Nietabschnitts, in einer axialen Schnittebene gesehen, sowohl auf der radial äußeren Seite als auch auf der radial inneren Seite gerundet ist und beispielsweise eine halbkreisförmige oder pfeilspitzartige Form aufweist.

Wie bereits angedeutet, führt der Führungsabschnitt des Funktionselementes beim Anbringen des Funktionselementes an ein Blechteil zu einer konusförmigen Vertiefung im Blechteil, und zwar bei einem vorgelochten Blechteil bei der Aufweitung des Loches durch den Führungsabschnitt und bei einer selbststanzenden Ausführungsform des Funktionselementes vor dem Heraustrennen eines StanzButzens durch den als Stanzabschnitt ausgebildeten Führungsabschnitt, wobei die konusförmige Vertiefung dann vom Nietabschnitt aufgeweitet wird. Die gerundete Ausbildung der äußeren Wandung des Nietabschnittes im Bereich seines freien Endes ist eine günstige Form für die weitere Aufweitung des Loches und der entsprechenden Verformung der konusförmigen Wandung der Vertiefung. Die gerundete Form auf der inneren Seite des freien Endes des Nietabschnittes hilft dagegen bei der Umbördelung des Nietabschnittes, was in einer entsprechend konkav gewölbten Ringfläche der Matrize erfolgt. Diese Form ermöglicht auch, daß der Ringspalt möglichst klein gehalten werden kann, ohne den Vorgang der Umbördelung des Nietabschnitts zu beeinträchtigen. Dadurch, daß der Ringspalt möglichst klein gehalten werden kann und sogar 0 mm betragen kann (was bedeutet, daß die innere Wandung des Nietabschnittes an dem äußeren Umfang des Führungsabschnittes anliegt), kann der Durchmesser des Funktionselementes als Ganzes möglichst klein gehalten werden, wodurch Material gespart und Kosten gesenkt werden können.

Der Ringspalt weist vorzugsweise eine radiale Abmessung im Bereich zwischen 0 mm und etwa 3 mm.

Der Ringspalt geht vorzugsweise in einem axialen Abstand vor der ringförmigen Anlagefläche auf der Nietabschnittsseite der ringförmigen Auflagefläche zu Ende. Diese Ausbildung führt zu einer stabilen Anbindung des Nietabschnittes an dem Kopfteil des Elementes und begünstigt eine feste Anbringung des Funktionselementes am Blechteil.

Wenn der Führungsabschnitt als Stanzabschnitt ausgebildet ist, weist er vorzugsweise eine ringförmige Schneidkante an seinem der Anlagefläche abgewandten Stirnende auf und diese Schneidkante wirkt mit einer entsprechend geformten Schneidkante einer mittleren Bohrung einer Matrize zusammen, um einen sauberen Stanzbutzen aus dem Blechteil bei der Anbringung des Funktionselementes am Blechteil herauszustanzen.

Besonders bevorzugt ist es, wenn Verdrehsicherungsmerkmale im Bereich der ringförmigen Auflagefläche und/oder am Nietabschnitt und/oder an der Mantelfläche des Kopfteils benachbart zur Auflagefläche angeordnet sind. Wenn die Verdrehsicherungsmerkmale im Bereich der Mantelfläche des Kopfteils vorgesehen sind, so können diese durch eine polygonale oder genutete Form der Mantelfläche erzeugt werden. Die Verdrehsicherungsmerkmale im Bereich der ringförmigen Auflagefläche und/oder am Nietabschnitt und gegebenenfalls an der Mantelfläche können durch Nasen oder durch rillenförmige Vertiefungen gebildet sein.

Wenn Verdrehsicherungsnasen vorgesehen sind, können diese erhaben an der Auflagefläche und am Nietabschnitt im Bereich des Überganges von der Auflagefläche in den Nietabschnitt vorliegen.

Das Funktionselement kann als hohles Element vorliegen, beispielsweise mit einer zylindrischen Aufnahme für eine drehbar gelagerte Welle oder für eine Gewinde schneidende oder Gewinde formende Schraube oder als Rastaufnahme für den Stift eines Clips oder anderen Gegenstandes.

Darüberhinaus kann das Funktionselement als Mutterelement ausgebildet sein, d.h. das Funktionselement weist einen Gewindezylinder auf, der entweder im Kopfteil oder im Führungsabschnitt oder zumindest teilweise im Kopfteil und im Führungsabschnitt vorgesehen sein kann. Das Funktionselement kann aber darüberhinaus auf der Außenseite des Führungsabschnittes eine zylindrischen Lagerfläche aufweisen und es kann auch als Bolzenelement realisiert werden.

Weitere bevorzugte Ausführungsformen des Funktionselement sowie des Zusammenbauteils ergeben sich aus den beigefügten Unteransprüchen sowie der weiteren Beschreibung von Ausführungsbeispielen.

Die Erfindung wird nachfolgend näher erläutert anhand von Ausführungsbeispielen unter Bezugnahme auf der Zeichnungen, welche zeigen:
- Fig. 1: eine Seitenansicht eines erfindungsgemäßen Funktionselementes in Form eines Hohlkörperelementes,
- Fig. 2: eine Draufsicht auf das obere Stirnenede des Funktionselementes der Fig. 1,
- Fig. 3: ein perspektivische Darstellung des Funktionselementes der Figuren 1 und 2,
- Fig. 4: eine teilweise in Längsrichtung geschnittene Darstellung des Funktionselementes der Figuren 1 bis 3 im Ausgangsstadium der Anbringung des Funktionselementes an ein Blechteil unter Anwendung einer Matrize,
- Fig. 5: eine Darstellung ähnlich der Fig. 4, jedoch zu einer späteren Phase der Anbringung des Funktionselementes am Blechteil,
- Fig. 6: eine Darstellung ähnlich der Fig. 5, jedoch in einem noch späteren Stadium der Anbringung des Funktionselementes an ein Blechteil,
- Fig. 7: eine Darstellung ähnlich der Fig. 6 nach Fertigstellung der Anbringung des Funktionselementes am Blechteil und
- Fig. 8: das Zusammenbauteil der Fig. 7 nach der Entfernung aus dem Werkzeug zur Herstellung des Zusammenbauteils.

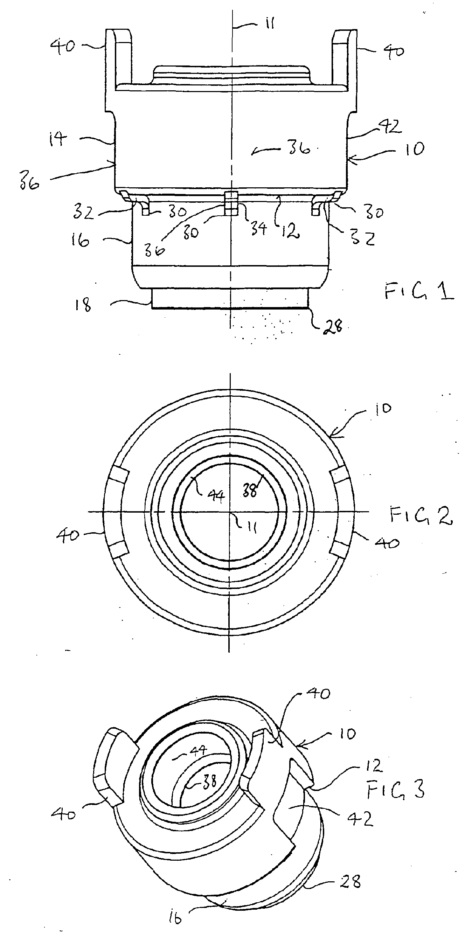

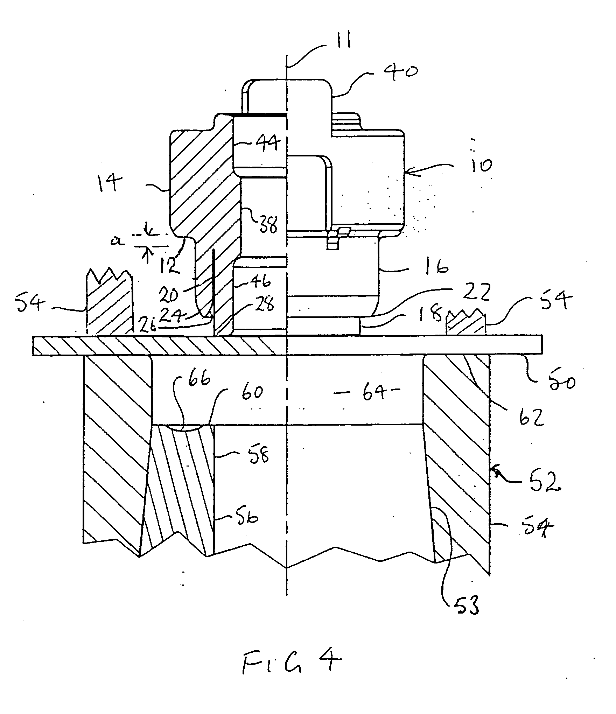

Bezugnehmend auf die Figuren 1 bis 4 ist das dort gezeigte Funktionselement 10 mit einem eine ringförmige Auflagefläche 12 aufweisenden Kopfteil 14 und einem rohrförmigen auf der Seite der Auflagefläche 12 des Kopfteils 14 vorgesehenen vom Kopfteil 14 weg erstreckenden Nietabschnitt 16 versehen. Das Funktionselement weist eine mittlere Längsachse 11 auf.

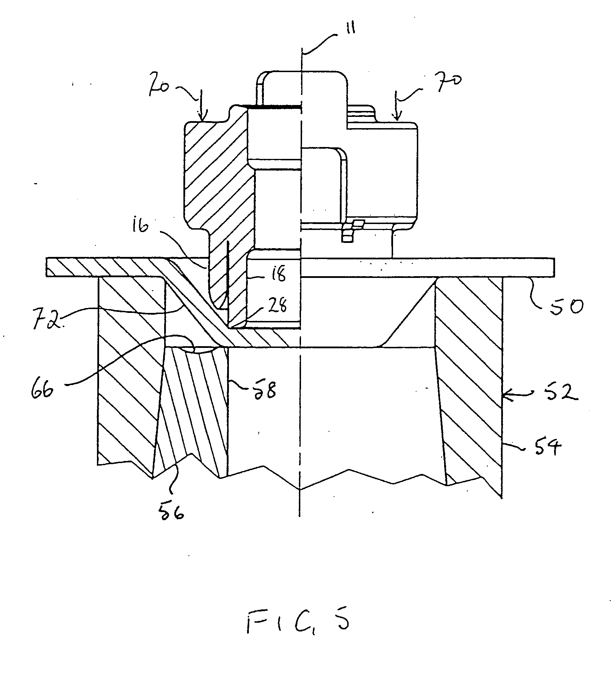

Ein rohrförmiger Führungsabschnitt 18 ist konzentrisch zum rohrförmigen Nietabschnitt 16 und radial innerhalb diesem angeordnet, wobei zwischen dem Führungsabschnitt 18 und dem Nietabschnitt 16 ein Ringspalt 20 vorgesehen ist, der nur aus Fig. 4 ersichtlich ist.

Wie ebenfalls aus Fig. 4 ersichtlich, ist das freie Ende 22 der Wandung des ringförmigen Nietabschnittes 16 in der axialen Schnittebene der Fig. 4 gesehen sowohl auf der radial äußeren Seite 24 als auch auf der radial inneren Seite 26 gerundet und hat hier eine gerundete pfeilspitzartige Form. Die Spitze der pfeilspitzartigen Form könnte aber ebenfalls gerundet sein, wodurch sich eine halbkreisförmige Form ergeben würde, die aber nicht gezeigt ist.

In der Darstellung der Fig. 4 weist der Ringspalt eine radiale Abmessung von 0 mm auf, d.h. der Nietabschnitt liegt am Führungsabschnitt 18 an, ist aber erst mit dem Führungsabschnitt 18 dort verbunden, wo der Ringspalt 20 in einem kurzem axialen Abstand "a'' vor der ringförmigen Auflagefläche 12 zu Ende geht.

Das Funktionselement der Figuren 1 bis 4 wird üblicherweise durch ein Kaltschlagverfahren hergestellt, dessen Grundzüge an sich gut bekannt sind. Zur Herstellung des eng am Führungsabschnitt anliegenden Nietabschnittes kann es notwendig sein, den Nietabschnitt erst mit einem gewissen radialen Abstand vom Führungsabschnitt durch Kaltschlagen herzustellen und anschließend in einer weiteren Phase des Kaltschlagverfahrens den Nietabschnitt an den Führungsabschnitt anzudrücken oder den Führungsabschnitt bis zur Anlage an den Nietabschnitt aufzuweiten oder die Verkleinerung des radialen Abstandes durch eine Kombination der beiden Maßnahmen zu erreichen. Günstig ist es, wenn der Ringspalt 20 einen möglichst geringen radialen Breite aufweist, da dies zu einer kompakten Ausbildung des Funktionselementes führt und Material spart.

Der Führungsabschnitt 18 ist hier als Stanzabschnitt ausgebildet und weist eine ringförmige Schneidkante 28 an seinem der Auflagefläche 12 abgewandten Stirnende, d.h. an seinem freien Ende auf.

Die Figuren 1 bis 4 zeigen weiterhin Verdrehsicherungsmerkmale 30 im Bereich der ringförmigen Auflagefläche 12 und am Nietabschnitt 16 auf, wobei die Verdrehsicherungsmerkmale hier durch Nasen gebildet sind, die erhaben an der Auflagefläche 12 und am Nietabschnitt 16 im Bereich des Überganges von der Auflagefläche in den Nietabschnitt 16 vorliegen. Die hier gezeigten Verdrehsicherungsnasen sind mit Seitenflanken 30 und 32 versehen, die in in Längsrichtung des Elementes sich erstreckenden Ebenen liegen. Die in Fig. 1 und 4 bei 34 und 36 scharfkantig ausgebildeten Verdrehsicherungsnasen können hier stattdessen mit gerundeten Kanten versehen werden. Die Verdrehsicherungsnasen könnten auch durch Vertiefungen in der Auflagefläche bzw. im Nietabschnitt realisiert werden. Auch bestünde die Möglichkeit der Mantelfläche 36 des Kopfteils 14 eine polygonale oder genutete Form zu geben. Das Funktionselement ist hier als Mutterelement realisiert und weist einen Gewindezylinder 38 auf, das koaxial zur Längsachse 11 des Funktionselementes angeordnet ist und in diesem Beispiel teilweise im Führungsabschnitt 18 vorliegt. Eine weitere Besonderheit des Mutterelementes der Figuren 1 bis 4 ist in den zwei Lappen 40 zu sehen, die von der oberen Stirnseite des Elementes 10 hinausragen und dadurch erzeugt werden, daß beim Kaltschlagverfahren Material aus den Bereichen 42 nach oben geschoben wird, so daß an den Stellen 42 entsprechende Vertiefungen entstehen, wobei die Bezeichnung "nach oben" lediglich im Hinblick auf die Darstellung gemäß Fig. 1 zu verstehen ist und wie andere Ortsangaben in dieser Anmeldung nur bezogen auf die Figuren verwendet wird und keine räumliche Beschränkung des Erfindungsgegenstandes darstellt. Die Lappen 40 sorgen dafür, daß ein Kabelschuh auf das Funktionselement mittels einer von oben eingesetzten Schraube befestigt werden kann, ohne daß der Kabelschuh mit der Schraube bei der Anbringung der Schraube gedreht wird, da eine Mitdrehung des Kabelschuhs durch die Lappen 40 verhindert wird. Wie insbesondere aus der Fig. 4 ersichtlich, weist das Funktionselement 10 zylindrische Aussparungen 44 und 46 oberhalb und unterhalb des Gewindezylinders 38 auf, wobei diese Freiräume einen Durchmesser aufweisen, der üblicherweise geringfügig größer bemessen wird als der Außendurchmesser einer Schraube, die in den Gewindezylinder 38 eingeschraubt wird.

Obwohl der Gewindezylinder 38 hier teilweise im Kopfteil 14 und teilweise im Führungsabschnitt 18 des Funktionselementes 10 angeordnet ist, könnte er auch vollständig im Kopfteil oder vollständig im Führungsabschnitt angeordnet werden.

Die Fig. 4 zeigt das Funktionselement 10 in einem ersten Stadium der Anbringung an ein Blechteil 50, wobei in der Darstellung Fig. 4 das Blechteil. 50 auf einer Matrize 52 abgestützt wird und gegen die Matrize 52 mittels eines ringförmigen Niederhalters 54 gedrückt wird, wobei der Niederhalter 54 vorzugsweise, aber nicht zwangsläufig vorgesehen sein muß.

Die Darstellung gemäß Fig. 4 geht davon aus, daß die Anbringung des Funktionselement 10 an das Blechteil 50 in einer Presse erfolgt, wobei die Matrize 52 im unteren Werkzeug der Presse angeordnet ist (nicht gezeigt) und das Funktionselement 10 mittels eines ebenfalls nicht gezeigten Setzkopfes auf das Blechteil 50 gedrückt wird, wobei der Setzkopf an einer Zwischenplatte der Presse oder an einem oberen Werkzeug der Presse angebracht sein kann. Solche Setzköpfe und Niederhalter 54 sind im Stand der Technik bestens bekannt und werden hier daher nicht extra beschrieben. Es sollte aber zum Ausdruck gebracht werden, daß auch andere Anordnungen innerhalb einer Presse möglich sind. Beispielsweise kann die Matrize 52 in einer Zwischenplatte der Presse angeordnet sein, wobei der Setzkopf mit oder ohne Niederhalter dann am oberen Werkzeug der Presse angebracht wird. Auch ist es möglich, die Matrize 52 am oberen Werkzeug der Presse vorzusehen und den Setzkopf mit oder ohne Niederhalter dann auf einer Zwischenplatte der Presse oder auf dem unteren Werkzeug der Presse zu montieren, d.h. das Funktionselement 10 in umgekehrter Richtung unterhalb des Blechteils 50 anzubringen.

Auch ist es durchaus möglich, das Funktionselement 10 von einem Roboter an das Blechteil 50 anzubringen, wobei der Roboter oder ein Hilfsroboter dann die Matrize 52 unterhalb des Blechteils hält und für die Anbringung der erforderlichen Presskraft auf das Funktionselement 10 sorgt.

In Fig. 4 ist eine zweiteilige Ausbildung der Matrize 52 gezeigt. Diese besteht aus einem äußeren ringförmigen Matrizenteil 54 und einem inneren, ebenfalls ringförmigen Matrizenteil 56 mit einer mittleren Längsbohrung 58, wobei in diesem Beispiel der innere Matrizenteil 56 eine leicht konusförmig verlaufende äußere Wand aufweist, die mit einer entsprechend geformten konusförmig verlaufenden inneren Wand 53 des äußeren Matrizenteils 54 zusammenarbeitet, so daß das obere Stirnende 60 des inneren Matrizenteils 56 unterhalb der oberen Stirnseite 62 des äußeren Matrizenteils 54 zu liegen kommt und hierdurch eine Vertiefung 64 bildet. Das obere Stirnende 60 des inneren Matrizenteils 56 bildet somit die Bodenfläche der Vertiefung 64 und weist im übrigen eine ringförmige konkav gewölbte Fläche 66 auf. Die mittlere Bohrung 58 des mittleren Matrizenteils 56 weist einen Durchmesser auf, der geringfügig größer ist als der Außendurchmesser des Führungsabschnittes 18. Die Vertiefung 64 weist einen Durchmesser auf, der etwas größer ist als der Außendurchmesser des Kopfteils 14 des Funktionselementes 10 zuzüglich die doppelte Stärke des Blechteils 50.

Sowohl das innere Matrizenteil 56 als auch dessen Bohrung 58, und auch das äußere Matrizenteil 54 und die zwischen den beiden Matrizenteilen definierte Vertiefung 64, sind koaxial zur mittleren Längsachse 11 des Funktionselementes 10 angeordnet. Die Matrize 52 könnte auch einteilig ausgeführt werden.

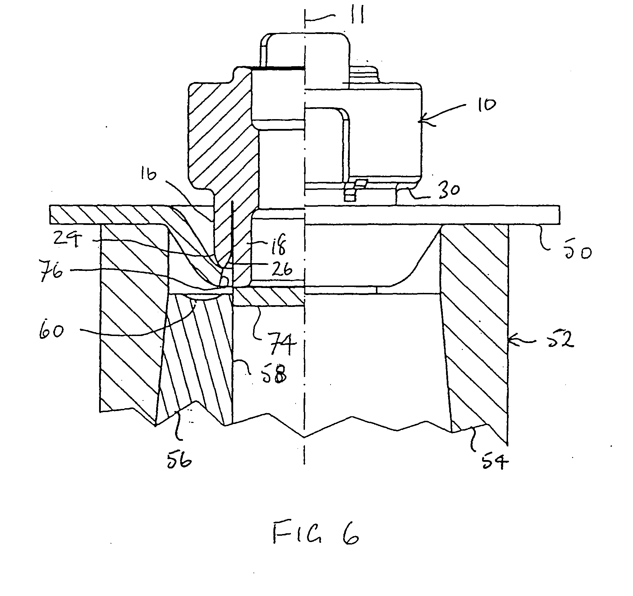

Ausgehend von dem Stadium der Fig. 4 wird nunmehr entsprechend der Fig. 5, durch die Anbringung einer Kraft in Pfeilrichtung 70 auf die obere Stirnseite des Funktionselementes 10 mittels des Setzkopfes z.B. in der Presse oder unter Anwendung eines Roboters und bei gleichzeitiger Abstützung der Matrize, das Funktionselement 10 gegen das Blechteil 50 gedrückt, wobei in Fig. 5 der wahlweise vorgesehene Niederhalter 54 der Darstellung halber weggelassen ist.

Man sieht, daß der Führungsabschnitt das Blechteil gegen das obere Stirnende 60 des inneren Matrizenteils 56 gedrückt und das Blech zu einer konusförmig verlaufenden Vertiefung 72 gezogen hat. In diesem Stadium hat die ringförmige Schneidkante 28 des als Stanzabschnitt 18 ausgebildeten Führungsabschnittes noch nicht angefangen das Blechteil 50 durchzuschneiden und das freie untere Stirnende 22 des Nietabschnitts 16 hat das Blechteil 50 noch nicht berührt.

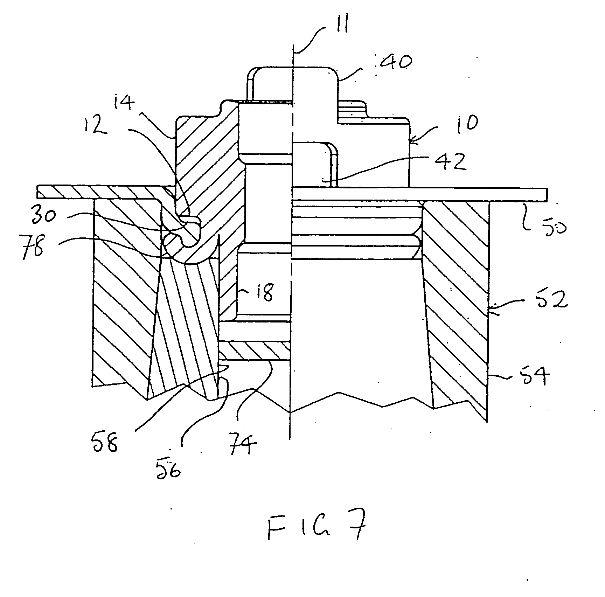

Im weiteren Stadium der Fig. 6 hat der Führungsabschnitt 18 einen Stanzbutzen 74 aus dem Boden der konusförmigen Vertiefung des Blechteils herausgetrennt und diesen teilweise durch die mittlere Bohrung 58 der Matrize gedrückt, wobei diese mittlere Bohrung 58 auch leicht nach unten divergierend ausgebildet sein kann, damit der Stanzbutzen über dieser mittleren Längsbohrung durch Schwerkraft, gegebenenfalls mit pneumatischer Unterstützung, entsorgt werden kann.

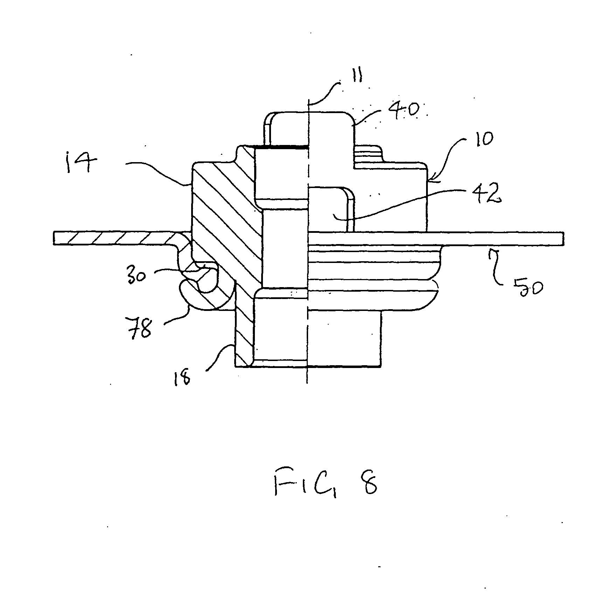

Nach dem Heraustrennen des Stanzbutzens hat auch-die gerundete Außenwand 64 am freien Ende des Nietabschnitts 16 die Wandung der konusförmigen Vertiefung des Blechteils 50 von der mittleren Längsachse 11 weggedrückt, d.h. die Wandung in eine etwas steilere Position gebracht und das Loch 76, das durch Heraustrennen des Stanzbutzens 74 entstanden ist, so weit aufgeweitet, daß das freie Ende des Nietabschnitts 16 nunmehr durch das Loch 76 durchgedrückt werden kann, so daß die innere gekrümmte Wandung 26 des freien Endes des Nietabschnitts in Berührung mit der ringförmigen Vertiefung 66 gelangen kann, wodurch bei einer weiteren nach unten gerichteten Bewegung des Funktionselementes aufgrund des Druckes in Pfeilrichtung 70 der rohrförmige Nietabschnitts 16 zu einem Nietbördel 78 gemäß Fig. 7 umgebördelt wird. Durch diesen Umbördelungsvorgang wird das Blechteil 50 im Bereich der bisherigen konusförmigen Vertiefung so verformt, daß sie formschlüssig zwischen der ringförmigen Auflagefläche 12 und dem umgebördelten Nietabschnitt geklemmt wird. Gleichzeitig werden die Verdrehsicherungsnasen 30 in das Blechmaterial hineingedrückt, so daß auch eine Verdrehsicherung entsteht. Wenn die Verdrehsicherungsmerkmale durch entsprechende Vertiefungen gebildet sind, so wird das Blechmaterial in solche Vertiefungen hineingedrückt, wodurch ebenfalls eine Verdrehsicherung entsteht.

Das Blechmaterial wird aber gleichzeitig teilweise in die Vertiefungen 42 hineingedrückt, die durch die Ausbildung der Lappen 40 entstanden sind, so daß auch in diesem Bereich eine Verdrehsicherung entsteht. Sollte das Kopfteil 14 des Funktionselementes 10 eine polygonale oder genutete oder gerippte Form aufweisen, so wird auch in diesem Bereich ein entsprechender Formschluß zwischen dem Blechteil und dem Funktionselement erzeugt.

Man sieht aus Fig. 7, daß der Führungsabschnitt 18 während der Anbringung des Funktionselementes 10 immer tiefer in die mittlere Bohrung 58 des inneren Matrizenteils 56 hineinreicht, wodurch eine sichere Führung des Funktionselementes erreicht wird.

Das fertiggestellte Zusammenbauteil, bestehend aus dem Funktionselement 10 und dem Blechteil 50, ist dann in Fig. 8 dargestellt, nach der Entfernung aus dem Anbringungswerkzeug, d. h. aus der Presse oder aus dem Roboter oder andersartig konzipierten Anbringungswerkzeugen.

Man sieht, daß der Führungsabschnitt deutlich über den ungebördelten Nietabschnitt 16 hinausragt, und es ist daher möglich, diesen Führungsabschnitt anschließend als zylindrische Lagefläche zu benutzen. Dies gilt ebenfalls für die Mantelfläche des Körperteils 14, die aus dem Blechteil 50 auf der anderen Seite des Blechteils hinausragt. Es ist im übrigen auch möglich, die Anordnung so zu dimensionieren, daß das Körperteil 14 noch weiter innerhalb der Vertiefung im Blechteil oder sogar vollständig innerhalb dieser Vertiefung untergebracht ist. In dem fertiggestellten Zustand gemäß Fig. 8 kann ein weiteres Bauteil, d.h. ein anderes Blechteil oder ein Kabelschuh, entweder auf der oberen Stirnseite des Funktionselementes oder auf der unteren Stirnseite der Fig. 8 befestigt werden, d.h. die entsprechende Schraube kann von oben kommend oder von unten kommend in den Gewindezylinder eingebracht werden. Es wäre auch möglich, Bauteile sowohl unten als auch oben anzubringen. Weiterhin kann sowohl der Führungsabschnitt 18 als auch der Kopfteil 14 als Abstandselement wirken, so daß das Element in ein aus zwei Blechteilen bestehenden hohles Bauteil eingebracht werden kann. Allerdings wäre es hier voraussichtlich notwendig, das Bauteil 50 vorzulochen, was grundsätzlich auch möglich ist, und zwar auch dann, wenn das Blechteil 50 allein steht, d.h. nicht mit einem weiteren Blechteil zu einem hohlen Bauteil zusammengesetzt ist. Die Lappen 40 sind nur wahlweise vorgesehen, und zwar insbesondere dann, wenn das Element als elektrisches Anschlußelement verwendet werden soll, bspw. als Wasseranschlußelement bei einer Fahrzeugkarosserie.

Das Funktionselement 10 gemäß der vorliegenden Erfindung hat den besonderen Vorteil, daß es auch mit Schutzschichten oder Lackschichten versehenen Blechteilen 50 verwendet werden kann und dennoch eine ausgezeichnete elektrische Verbindung erzeugt, und zwar im Bereich des Stanzloches und der Verdrehsicherungsnasen die gerade bei einer scharfkantigen Ausbildung der Verdrehsicherungsnasen die Schutzbeschichtung lokal durchschneiden und für eine metallische Verbindung zum Blechteil 50 sorgen. Darüberhinaus wird die Schutzschicht an Stellen beschädigt, die innerhalb des Formschlusses zwischen dem Blechteil 50 und dem Funktionselement liegen, so daß dort eine Abdichtung vorliegt und Korrosion verhindert wird. Der Formschluß zwischen dem Blechteil und dem Funktionselement ist so intensiv, daß die Verbindung eine abgedichtete Verbindung, darstellt, die, wenn es auf eine besondere Abdichtung ankommt auch durch Anbringung eines Klebstoffs auf das Element oder das Blechteil unterstützt werden kann. Durch die Vertiefung im Blechteil 50 im Bereich des Funktionselementes wird eine ausgezeichnete Verbindung mit dem Blechteil sichergestellt, so daß ein hoher Widerstand gegen Auszugskräfte in beide Richtungen erzeugt wird und außerdem ein hoher Widerstand gegen Scherkräfte und Torsionskräfte vorliegt. Außerdem kann das Element bei wechselnder dynamischen Belastungen verwendet werden und Ermüdungserscheinungen bei dynamischen Belastungen sind nicht zu befürchten.

Die hier beschriebenen Funktionselemente können zum Beispiel aus allen Materialien hergestellt werden, die die Festigkeitsklasse 5.6 oder höher erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Funktionselemente alle Materialien genannt werden, die im Rahmen der Kaltverformung die Festigkeitswerte der Klasse 8 gemäß Isostandard erreichen, beispielsweise eine 35B2-Legierung gemäß DIN 1654. Die so gebildeten Befestigungselemente eigenen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie bspw. AM50 in Frage.

## Patentansprüche

1. Verfahren zur Erzeugung einer elektrisch leitenden Verbindung zwischen einem elektrischen Anschlusselement wie ein Kabelschuh und einem Blechteil (50), bei dem ein hohles Befestigungselement (10) mit dem Blechteil verdrehfest vernietet wird und hierdurch eine elektrisch leitende Verbindung zwischen Befestigungselement und Blechteil erzeugt wird und das so hergestellte Zusammenbauteil anschließend mit einer Schutzbeschichtung, wie beispielsweise eine Lackschicht, versehen wird,
**dadurch gekennzeichnet,**
**dass** im Bereich der Stirnseite (80) des Befestigungselements, an der das elektrische Anschlusselement angebracht wird, eine Aufnahme (40) für das elektrische Anschlusselement ausgebildet wird, die eine Verdrehung der Anschlusseinrichtung gegenüber dem Befestigungselement (10) verhindert und dass eine Gewinde formende oder schneidende Schraube zur Befestigung des elektrischen Anschlusselements auf das hohle Befestigungselement (10) in das hohle Befestigungselement (10) eingeschraubt wird und dort durch die Einschraubbewegung ein Gewinde formt bzw. schneidet.

2. Verfahren nach Anspruch 1,
**dadurch gekennzeichnet,**
**dass** das Befestigungselement (10) selbststanzend an das Blechteil angebracht wird.

3. Verfahren nach Anspruch 1 oder 2,
**dadurch gekennzeichnet,**
**dass** die Aufnahme durch über die Stirnseite des Befestigungselements hinausragende Lappen (40) gebildet ist.

4. Verfahren nach Anspruch 3,
**dadurch gekennzeichnet,**
**dass** die voneinander einen Abstand aufweisenden Lappen seitlich der zylindrischen Aufnahme des hohlen Befestigungselements (10) angeordnet sind.

5. Verfahren nach Anspruch 1,
**dadurch gekennzeichnet,**
**dass** dem Kopfteil (14) des hohlen Befestigungselements (10) eine polygonale genutete oder gerippte Form gegeben wird.

6. Hohles Befestigungselement zur elektrisch leitfähigen Anbringung eines elektrischen Anschlusselements, wie ein Kabelschuh, an ein Blechteil,
**dadurch gekennzeichnet,**
**dass** das hohle Befestigungselement (10) einen Kopfteil (14) und einen Nietabschnitt (16) aufweist, wobei der Nietabschnitt (16) über eine Anlagefläche (12) für das Blechteil in den Kopfteil (14) übergeht und Verdrehsicherungsmerkmale (30) an der Anlagefläche und/oder am Nietabschnitt (16) vorgesehen sind, wobei das hohle Befestigungselement eine zylindrische Aufnahme für eine Schraube aufweist an einer Stelle, an der ein Gewinde durch Eindrehen einer Gewinde schneidenden oder formenden Schraube (106) auszubilden ist, und dass an der dem Nietabschnitt (16) abgewandten Stirnseite des Kopfteils (14) eine Aufnahme (40) versehen ist, die eine Mitdrehung des elektrischen Anschlusselements verhindert.

7. Befestigungselement nach Anspruch 6,
**dadurch gekennzeichnet,**
**dass** Verdrehsicherungsmerkmale (30) im Bereich der ringförmigen Auflagefläche (12) und/oder am Nietabschnitt (16) und/oder an der Mantelfläche des Kopfteils (14) benachbart zur Auflagefläche (12) angeordnet sind.

8. Befestigungselement nach Anspruch 7,
**dadurch gekennzeichnet,**
**dass** die Verdrehsicherungsmerkmale (30) durch Nasen oder durch rillenförmige Vertiefungen gebildet sind.

9. Befestigungselement nach Anspruch 8, bei der Verdrehsicherungsnasen (30) vorgesehen sind und diese erhaben an der Auflagefläche (12) und am Nietabschnitt (16) im Bereich des Überganges von der Auflagefläche in den Nietabschnitt vorliegen.

10. Befestigungselement nach Anspruch 9,
**dadurch gekennzeichnet,**
**dass** sich die Verdrehsicherungsnasen (30) in radialer Richtung an der Auflagefläche (12) und in axialer Richtung am Nietabschnitt (16) erstrecken.

11. Befestigungselement nach einem der Ansprüche 6 bis 10,
**dadurch gekennzeichnet,**
**dass** die Verdrehsicherungsnasen eine allgemein gerundete Form aufweisen oder mit Seitenflanken (32) versehen sind, die in in Längsrichtung des Elementes sich erstreckenden Ebenen liegen.

12. Befestigungselement nach Anspruch 6,
**dadurch gekennzeichnet,**
**dass** die Aufnahme durch mindestens einen Lappen (40) gebildet ist, die bei Anbringung eines Kabelschuhs eine Drehung desselben verhindert.

13. Befestigungselement nach Anspruch 9 oder 12,
**dadurch gekennzeichnet,**
**dass** an der Stelle jedes Lappens (40) die Mantelfläche des Kopfteils (14) eine entsprechende Vertiefung (42) aufweist.

14. Zusammenbauteil bestehend aus einem Blechteil (50) und einem an diesem über eine Nietverbindung angebrachten hohlen Befestigungselement (10), wobei das Befestigungselement mittels Verdrehsicherungsmerkmalen (30) verdrehsicher am Blechteil befestigt ist und das Befestigungselement und das Blechteil gemeinsam mit einer Schutzbeschichtung (120) wie eine Lackschicht beschichtet sind und eine metallische bzw. elektrische Verbindung zwischen dem Befestigungselement und dem Blechteil im Bereich des Stanzlochs und/oder den Verdrehsicherungsmerkmalen (32) vorgesehen ist,
**dadurch gekennzeichnet,**
**dass** das Befestigungselement eine zylindrische Aufnahme zur Aufnahme einer Gewinde formenden oder schneidenden Schraube aufweist und dass an der der Nietverbindung abgewandten Stirnseite des Befestigungselements dieses eine Aufnahme (40) aufweist, die eine Mitdrehung des elektrischen Anschlusselements verhindert.

15. Zusammenbauteil nach Anspruch 14,
**dadurch gekennzeichnet,**
**dass** das Befestigungselement mit zwei Lappen (40) ausgeführt wird, die voneinander einen Abstand aufweisen und seitlich der zylindrischen Aufnahme des hohlen Befestigungselements (10) angeordnet sind.
